# EUROPÄISCHE PATENTSCHRIFT

(11) **EP 1 925 679 B1**
(45) Veröffentlichungstag und Bekanntmachung des Hinweises auf die Patenterteilung: **11.05.2011**
(21) Anmeldenummer: 07115217.7
(22) Anmeldetag: 29.08.2007
(51) Int. Cl.: C21B 13/00, C21B 13/10

(54) **Verfahren zum Kalzinieren von Feststoffen oder Schlämmen**
Method for calcinating solids or slurry
Procédé de calcination de substances solides ou de boues

(30) Priorität: 07.11.2006 DE 102006052416
(43) Veröffentlichungstag der Anmeldung: 28.05.2008
(73) Patentinhaber: Polysius AG, 59269 Beckum (DE); Maerz-Ofenbau AG, 8027 Zürich (CH)
(72) Erfinder: Beyer, Christoph, 48157 Münster (DE); Egger, Walter, A-9545 Radenthein (AT)
(74) Vertreter: Tetzner, Michael

(56) Entgegenhaltungen:
- WO-A-99/29910
- DE-B- 1 225 673
- US-A- 1 811 920
- US-A- 4 453 474
- US-A- 4 459 923
- US-A1- 2005 217 545

## Beschreibung

Die Erfindung betrifft ein Verfahren zum Kalzinieren von Feststoffen oder Schlämmen in einem Etagenofen mit einem Feuerungsbereich, der wenigstens einen oberen, beheizten Herd und wenigstens einen unteren, beheizten Herd aufweist und einem Kühlbereich, der über einen oder mehrere unbeheizte Herde verfügt, wobei zu kalzinierendes Material zunächst in den Feuerungsbereich und anschließend in den Kühlbereich gelangt.

Die US-A-4,453,474 offenbart einen Etagenofen mit einem Vorwärmbereich, einem Feuerungsbereich und einem Kühlbereich, wobei ein Teil des Einsatzmaterials dem Vorwärmbereich und ein Teil dem Feuerungsbereich zugeführt wird.

Aus der DE-AS-1 225 673 ist ein Verfahren zur trockenen Reduktion von Eisenerz in einem Etagenofen in Anwesenheit eines Reduktionsgases und ggf. eines festen Reduktionsmittels bekannt. Über dem Etagenofen ist ein Staubabscheider zur Entstaubung des behandelten Gutes angeordnet, wobei der abgeschiedene Staub über Fördereinrichtungen in eine mittlere Etage als Rücklaufgut gegeben werden kann.

Die US-A-1,811,920 betrifft einen Etagenofen mit einem Trocknungsherd und acht Feuerungsherden, wobei das Einsatzmaterial in einzelnen Fraktionen den verschiedenen Herden aufgeben wird.

Der Erfindung liegt nun die Aufgabe zugrunde, das Verfahren zum Kalzinieren von Feststoffen oder Schlämmen hinsichtlich des spezifischen Energiebedarfs zu senken.

Erfindungsgemäß wird diese Aufgabe durch die Merkmale der des Anspruchs 1 gelöst.

Das Verfahren zum Kalzinieren von Feststoffen oder Schlämmen sieht einen Etagenofen vor, im Wesentlichen bestehend aus einem Feuerungsbereich, der wenigstens einen oberen, beheizten Herd und wenigstens einen unteren, beheizten Herd aufweist und einem Kühlbereich, der über ein oder mehrere unbeheizte Herde verfügt. Das zu kalzinierende Materials gelangt zunächst in den Feuerungsbereich und anschließend in den Kühlbereich. Ein Teil des zu kalzinierenden Materials wird unter Umgehung des Feuerungsbereichs dem Kühlbereich zugeführt.

Der Erfindung liegt die Erkenntnis zugrunde, dass die Temperatur des Materials im Kühlbereich mehr als ausreichend ist, um Material, welches unter Umgehung des Feuerungsbereiches, ausreichend erwärmt und durchkalziniert werden kann. Handelt es sich bei den Feststoffen oder Schlämmen um Magnesit, beträgt die erforderliche Kalzinationstemperatur ca. 600°C. Eine ausreichende Durchmischung des heißen kalzinierten Materials und des zugeführten, ggf. kalten Frischmaterials im Materialbett wird durch die Räumarme des Etagenofens und deren Räumschaufeln gewährleistet. Durch die erforderliche Kalzinationsenthalpie des zugeführten Materials sowie dessen Wärmekapazität kommt es zu einem deutlichen Einschnitt des Temperaturprofils in den nachgeschalteten Herden. Somit lässt sich nicht nur eine Reduktion des spezifischen Energiebedarfs erreichen, sondern es ist auch eine Kapazitätserhöhung bestehender, bereits ausgelasteter Aggregate, insbesondere im Feuerungsbereich, möglich. Weiterhin reduziert sich die Materialaustragstemperatur und führt somit zu einer Entlastung und Kapazitätssteigerung der nachgeschalteten Kühlstufe, die in einem den Markterfordernissen entsprechenden Zweistufen-Sinterverfahren mit zwischengeschalteter Feinstmahlung unabdingbar ist.

Der Teil des zu kalzinierenden Materials, welcher unter Umgehung des Feuerungsbereiches dem Kühlbereich zugeführt wird, ist so zu bemessen, dass die Produktqualität des kalzinierten Gesamtmassenstroms noch den Spezifikationen entspricht bzw. den Anforderungen des nachgeschalteten Prozesses, insbesondere der im Sinterbrand zu erzielenden Kornrohdichte genügt.

Weitere Ausgestaltungen der Erfindung sind Gegenstand der Unteransprüche.

Gemäß einer Ausgestaltung der Erfindung wird zumindest ein Teil des zu kalzinierenden Materials vor dem Feuerungsbereich einem Vorwärmbereich zugeführt. Außerdem kann ein anderer Teil des zu kalzinierenden Materials unter Umgehung des wenigstens einen oberen beheizten Herds des Feuerungsbereichs dem wenigstens einen unteren beheizten Herd zugeführt werden.

Es ist dann auch denkbar, dass der unter Umgehung des wenigstens einen oberen, beheizten Herds des Feuerungsbereichs dem wenigstens einen unteren, beheizten Herd und/oder dem Kühlbereich zugeführte Teil des zu kalzinierenden Materials eine geringere Korngröße als das dem Vorwärmbereich zugeführte Material aufweist.

Gemäß einer weiteren Ausgestaltung beträgt der weiter unten zugeführte Teil des zu kalzinierenden Materials 3 bis 30% vorzugsweise 5 bis 15% des gesamten zu kalzinierenden Materials. Außerdem wird der zugeführte Teil des zu kalzinierenden Materials in einem Bereich zugeführt, in dem das dort schon vorhandene Material eine Temperatur von wenigstens 400°C, vorzugsweise wenigstens 600°C aufweist.

Es ist weiterhin vorgesehen, dass es sich bei dem zugeführten Teil des zu kalzinierenden Materials um Frischgut handelt. Im Rahmen der Erfindung ist es aber auch denkbar, dass es sich bei dem zugeführten Teil des zu kalzinierenden Materials um Gut handelt, welches aus dem Vorwärmbereich ausgeschleust worden ist.

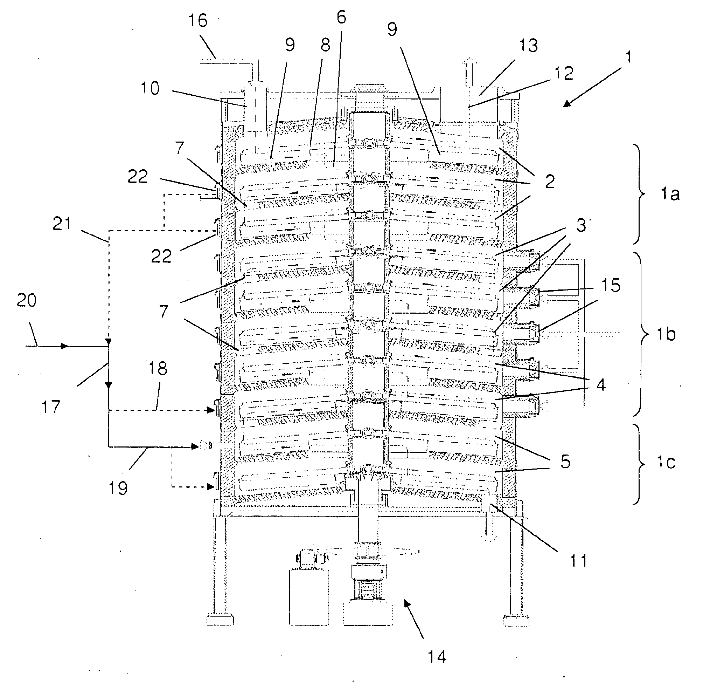

Weitere Vorteile und Ausgestaltungen der Erfindung werden im Folgenden anhand der Beschreibung und der Zeichnung näher erläutert.

Die Zeichnung zeigt eine schematische Schnittdarstellung der erfindungsgemäßen Vorrichtung zum Kalzinieren von Feststoffen oder Schlämmen.

Die in der Zeichnung dargestellte Vorrichtung zum Kalzinieren von Feststoffen oder Schlämmen weist einen Etagenofen 1 auf, im Wesentlichen bestehend aus einem Vorwärmbereich 1a mit mehreren unbeheizten Herden 2, einem Feuerungsbereich 1b mit mehreren oberen, beheizten Herden 3 und mehreren unteren, beheizten Herden 4 sowie einem Kühlbereich 1c mit mehreren unbeheizten Herden 5.

Die Herde sind abwechselnd als Innenherde und Außenherde ausgebildet. Die Innenherde weisen innenliegende Ringöffnungen 6 und die Außenherde radial außenliegende Übergabestellen 7 auf. Weiterhin ist jeder Herd mit rotierenden Räumarmen 8 ausgestattet, die Räumschaufeln 9 tragen, um das Material im Falle der Innenherde nach innen zu der Ringöffnung 6 bzw. bei den Außenherden nach außen zu den Übergabestellen 7 zu fördern. An der Ringöffnung 6 bzw. den Übergabestellen 7 fällt das Material in den darunter liegenden Herd.

Das zu kalzinierende Material 16 wird dem obersten Herd über eine Materialaufgabestelle 10 zugeführt. Der Weg des Materials durch den Etagenofen 1 ist durch eine strichpunktierte Linie dargestellt. Der unterste Herd ist mit einer Materialaustragsstelle 11 versehen, die zur Ausschleusung des Materials dient.

Im Gegenstrom zum Material wird der Etagenofen von einen Gasstrom 12 durchströmt, der im Kühlbereich 1c eine Kühlung des kalzinierten Materials und in den oberen Herden eine Vorwärmung des zu kalzinierenden Materials bewirkt. Dieser Gastrom 12 wird über einen Abluftstutzen 13 im Bereich des obersten Herdes abgeführt. Die Rotation der Räumarme erfolgt über eine geeignete Antriebseinrichtung 14.

Während es sich bei den Herden des Vorwärmbereichs 1a und des Kühlbereichs 1 c um unbeheizte Herde handelt, sind die Herde 3, 4 des Feuerungsbereichs 1b beheizt und beispielsweise mit Brennern 15 versehen.

Beim Verfahren zum Kalzinieren von Feststoffen oder Schlämmen wird der Großteil des zu kalzinierenden Materials 16 über die Materialaufgabestelle 10 dem Etagenofen zugeführt. Das Material wird dabei zunächst in den Herden des Vorwärmbereichs 1a mittels des heißen Gasstroms 12 vorgewärmt bevor es in den Herden des Feuerungsbereichs 1b kalziniert wird. Anschließend findet in den Herden des Kühlbereichs 1c eine Abkühlung des Gutes statt.

Weiterhin wird ein Teil 17 des zu kalzinierenden Materials unter Umgehung der oberen, beheizten Herde 3 des Feuerungsbereichs 1b dem Kühlbereich 1c zugeführt wird (Teil 19). Es wäre dabei auch denkbar, dass man einen anderen Teil 18 davon nicht dem Kühlbereich 1c, sondern wenigstens einem unteren, beheizten Herd 4 zuführt.

Gemäß einer bevorzugten Ausgestaltung der Erfindung wird der Teil 17 des zu kalzinierenden Materials unter Umgehung des gesamten Feuerungsbereichs dem Kühlbereich zugeführt. Das Material kann dabei wahlweise lediglich dem obersten Herd des Kühlbereichs 1c oder auch mehreren Herden des Kühlbereichs 1c aufgegeben werden.

Bei dem zugeführten Teil 17 des zu kalzinierenden Materials handelt es sich vorzugsweise um Frischgut 20. Es ist aber auch denkbar, dass man aus einem der Herde des Vorwärmbereichs 1a einen Teil 21 des Materials ausschleust, welches dann einem der unteren Herde 4, insbesondere dem untersten, beheizten Herd 4 und/oder dem Kühlbereich 1c zugeführt wird. Zur Ausschleusung des Materials werden geeignete Mittel 22 zum Ausschleusen des Materials vorzusehen.

Handelt es sich bei dem zugeführten Teil 17 des zu kalzinierenden Materials um Frischgut 20, besteht die Möglichkeit, dass dieser Teil 17 des zu kalzinierenden Materials eine geringere Korngröße als das dem Vorwärmbereich 1a zugeführte, zu kalzinierende Material 16 aufweist. Grundsätzlich wird die Menge des zugeführten Teils 17 von der Produktqualität des kalzinierten Gesamtmassenstroms abhängen. Bei den der Erfindung zugrundeliegenden Versuchen hat sich ein Anteil des weiter unten zugeführten Teils 17 des zu kalzinierenden Materials im Bereich von 3 bis 30%, vorzugsweise im Bereich von 5 bis 15% des gesamten zu kalzinierenden Materials als besonders zweckmäßig erwiesen.

Weiter ist zu beachten, dass der weiter unten zugeführte Teil 17 des zu kalzinierenden Materials in einem Bereich zugeführt wird, in dem das dort vorhandene Material eine so hohe Temperatur hat, dass das zugeführte Material noch ausreichend kalziniert wird. Zweckmäßigerweise beträgt die Temperatur in diesem Bereich wenigstens 400°C, vorzugsweise 600°C.

Die oben beschriebene Vorrichtung eignet sich besonders zum Kalzinieren von Magnesit, Dolomit oder Kalk.

Neben einer deutlichen Kapazitätserhöhung eines im herkömmlichen Betrieb bereits ausgelasteten Etageofens 1 ergibt sich weiterhin eine deutliche Reduktion der Materialaustragstemperatur. Weiterhin lässt sich eine deutliche Energieeinsparung verzeichnen, da der weiter unten zugeführte Teil 17 des Materials durch die Wärme des aus dem Feuerungsbereich kommenden Materials kalziniert wird.

## Patentansprüche

1. Verfahren zum Kalzinieren von Feststoffen oder Schlämmen in einem Etagenofen (1) mit einem Feuerungsbereich (1b), der wenigstens einen oberen, beheizten Herd (3) und wenigstens einen unteren, beheizten Herd (4) aufweist und einem Kühlbereich (1c), der über ein oder mehrere unbeheizte Herde (5) verfügt, wobei zu kalzinierendes Material (16,20) zunächst in den Feuerungsbereich und anschließend in den Kühlbereich gelangt,
**dadurch gekennzeichnet, dass** ein Teil (19) des zu kalzinierenden Materials unter Umgehung des Feuerungsbereichs (1b) dem Kühlbereich (1c) zugeführt wird.

2. Verfahren nach Anspruch 1, **dadurch gekennzeichnet, dass** ein anderer Teil (18) des zu kalzinierenden Materials (16,20) unter Umgehung des wenigstens einen oberen beheizten Herds (3) des Feuerungsbereichs (1b) dem wenigstens einen unteren beheizten Herd (4) zugeführt wird.

3. Verfahren nach Anspruch 1 oder 2, **dadurch gekennzeichnet, dass** der unter Umgehung des wenigstens einen oberen beheizten Herds (3) des Feuerungsbereichs (1b) dem wenigstens einen unteren beheizten Herd (4) und/oder dem Kühlbereich (1c) zugeführte Teil (18, 19) des zu kalzinierenden Materials (16,20) durch die Wärme des aus dem Feuerungsbereich (1b) kommenden Materials kalziniert wird.

4. Verfahren nach Anspruch 1, **dadurch gekennzeichnet, dass** zumindest ein Teil (16) des zu kalzinierenden Materials vor dem Feuerungsbereich (1b) einem Vorwärmbereich (1a) zugeführt wird.

5. Verfahren nach Anspruch 4 oder 2, **dadurch gekennzeichnet, dass** der unter Umgehung des wenigstens einen oberen beheizten Herds (3) des Feuerungsbereichs (1b) dem wenigstens einen unteren beheizten Herd (4) und/oder dem Kühlbereich (1c) zugeführte Teil (18, 19) des zu kalzinierenden Materials (16,20) eine geringere Korngröße als das dem Vorwärmbereich (1a) zugeführte Material aufweist.

6. Verfahren nach Anspruch 1 oder 2, **dadurch gekennzeichnet, dass** der unter Umgehung des wenigstens einen oberen beheizten Herds (3) des Feuerungsbereichs (1b) dem wenigstens einen unteren beheizten Herd (4) und/oder dem Kühlbereich (1c) zugeführte Teil (18, 19) des zu kalzinierenden Materials (16,20) 3 bis 30%, vorzugsweise 5 bis 15% des gesamten zu kalzinierenden Materials beträgt.

7. Verfahren nach Anspruch 1 oder 2, **dadurch gekennzeichnet, dass** der unter Umgehung des wenigstens einen oberen beheizten Herds (3) des Feuerungsbereichs (1b) dem wenigstens einen unteren beheizten Herd (4) und/oder dem Kühlbereich (1c) zugeführte Teil (18, 19) des zu kalzinierenden Materials (16,20) in einem Bereich zugeführt wird, in dem das dort schon vorhandene Material noch eine Temperatur von wenigstens 400°C, vorzugsweise wenigstens 600°C aufweist.

8. Verfahren nach Anspruch 1, **dadurch gekennzeichnet, dass** der unter Umgehung des Feuerungsbereichs (1b) dem Kühlbereich (1c) zuzuführende Teil (19) des zu kalzinierenden Materials (16,20) in einem oder in mehreren Herden (5) des Kühlbereichs (1c) aufgegeben wird.

9. Verfahren nach Anspruch 1, **dadurch gekennzeichnet, dass** ein Teil (21) des zu kalzinierenden Materials (16) von einem beliebigen Herd des Vorwärm-, (1a) Feuerungs- (1b) oder Kühlbereichs (1c) aus dem Etagenofen (1) ausgeschleust werden kann.

10. Verfahren nach Anspruch 1, **dadurch gekennzeichnet, dass** es sich bei dem zu kalzinierenden Material (16, 20) um Magnesit, Dolomit oder Kalk handelt.

11. Verfahren nach Anspruch 1 oder 2, **dadurch gekennzeichnet, dass** es sich bei dem Teil (18, 19) des zu kalzinierenden Materials, der unter Umgehung des wenigstens einen oberen beheizten Herds (3) des Feuerungsbereichs (1b) dem wenigstens einen unteren beheizten Herd (4) und/oder dem Kühlbereich (1c) zugeführt wird, um Frischgut (20) handelt.

## Claims

1. Process for calcining solids or sludges in a multiple-deck furnace (1) having a firing region (1b), which has at least one upper heated hearth (3) and at least one lower heated hearth (4), and having a cooling region (1c), which is provided with one or more unheated hearths (5), material (16,20) to be calcined passing first into the firing region and then into the cooling region,
**characterised in that** a portion (19) of the material to be calcined is delivered to the cooling region (1c), bypassing the firing region (1b).

2. Process according to claim 1, **characterised in that** another portion (18) of the material (16,20) to be calcined is delivered to the at least one lower heated hearth (4), bypassing the at least one upper heated hearth (3) of the firing region (1b).

3. Process according to claim 1 or 2, **characterised in that** the portion (18, 19) of the material (16,20) to be calcined delivered to the at least one lower heated hearth (4) and/or to the cooling region (1c), bypassing the at least one upper heated hearth (3) of the firing region (1b), is calcined by the heat of the material coming out of the firing region (1b).

4. Process according to claim 1, **characterised in that** at least one portion (16) of the material to be calcined is delivered to a pre-heating region (1a) upstream of the firing region (1b).

5. Process according to claim 4 or 2, **characterised in that** the portion (18, 19) of the material (16,20) to be calcined delivered to the at least one lower heated hearth (4) and/or to the cooling region (1c), bypassing the at least one upper heated hearth (3) of the firing region (1b), has a smaller particle size than has the material delivered to the pre-heating region (1a).

6. Process according to claim 1 or 2, **characterised in that** the portion (18, 19) of the material (16,20) to be calcined delivered to the at least one lower heated hearth (4) and/or to the cooling region (1c), bypassing the at least one upper heated hearth (3) of the firing region (1b), amounts to from 3 to 30%, preferably from 5 to 15% of all of the material to be calcined.

7. Process according to claim 1 or 2, **characterised in that** the portion (18, 19) of the material (16,20) to be calcined delivered to the at least one lower heated hearth (4) and/or to the cooling region (1c), bypassing the at least one upper heated hearth (3) of the firing region (1b), is delivered to a region in which the material already present still has a temperature of at least 400°C, preferably at least 600°C.

8. Process according to claim 1, **characterised in that** the portion (19) of the material (16,20) to be calcined that is to be delivered to the cooling region (1c), bypassing the firing region (1b), is fed into one or more hearths (5) of the cooling region (1c).

9. Process according to claim 1, **characterised in that** a portion (21) of the material (16) to be calcined can be discharged from the multiple-deck furnace (1) from any hearth of the pre-heating region (1a), of the firing region (1b) or of the cooling region (1c).

10. Process according to claim 1, **characterised in that** the material (16, 20) to be calcined is magnesite, dolomite or lime.

11. Process according to claim 1 or 2, **characterised in that** the portion (18, 19) of the material to be calcined delivered to the at least one lower heated hearth (4) and/or to the cooling region (1c), bypassing the at least one upper heated hearth (3) of the firing region (1b), is fresh material (20).

## Revendications

1. Procédé de calcination de substances solides ou de boues dans un four à soles multiples (1) comprenant une zone de combustion (1b), qui est dotée d'au moins une sole chauffée supérieure (3) et d'au moins une sole chauffée inférieure (4), et une zone de refroidissement (1c), qui est dotée d'une ou de plusieurs sole / s (5), la matière à calciner (16, 20) étant amenée d'abord dans la zone de combustion et ensuite dans la zone de refroidissement, **caractérisé en ce qu'**une partie (19) de la matière à calciner est conduite à la zone de refroidissement (1c) sans passer par la zone de combustion (1b).

2. Procédé selon la revendication 1, **caractérisé en ce qu'**une autre partie (18) de la matière à calciner (16, 20) est conduite à la sole chauffée inférieure (4), au moins prévue, sans passer par la sole chauffés supérieurs (3), au moins prévue, de la zone de combustion (1b).

3. Procédé selon revendication 1 ou 2, **caractérisé en ce que** la partie (18, 19) de la matière à calciner (16, 20), conduite à la sole chauffée inférieure (4), au moins prévue, et / ou à la zone de refroidissement (1c), sans passer par la sole chauffée supérieure (3), au moins prévue, de la zone de combustion (1b) est calcinée par la chaleur de la matière en provenance de la zone de combustion (1b).

4. Procédé selon la revendication 1, **caractérisé en ce qu'**au moins une partie (16) de la matière à calciner est conduite dans une zone de préchauffage (1a), en amont de la zone de combustion (1b).

5. Procédé selon l'une des revendications 4 ou 2, **caractérisé en ce que** la partie (18, 19) de la matière à calciner (16, 20), conduite à la sole chauffée inférieure (4), au moins prévue, et / ou à la zone de refroidissement (1c), sans passer par la sole chauffée supérieure (3), au moins prévue, de la zone de combustion présente une granulométrie, qui est inférieure à celle de la matière conduite dans la zone de préchauffage (1a).

6. Procédé selon revendication 1 ou 2, **caractérisé en ce que** la partie (18, 19) de la matière à calciner (16, 20), conduite à la sole chauffée inférieure (4), au moins prévue, et / ou à la zone de refroidissement (1c), sans passer par la sole chauffée supérieure (3), au moins prévue, de la zone de combustion (1b), représente 3 à 30 %, de préférence 5 à 15 % de la totalité de la matière à calciner.

7. Procédé selon revendication 1 ou 2, **caractérisé en ce que** la partie (18, 19) de la matière à calciner (16, 20), conduite à la sole chauffée inférieure (4), au moins prévue, et / ou à la zone de refroidissement (1c), sans passer par la sole chauffée supérieure (3), au moins prévue, de la zone de combustion (1b), est conduite dans une zone, dans laquelle la matière, déjà présente, a une température d'au moins 400 ° C, de préférence d'au moins 600 °C.

8. Procédé selon la revendication 1, **caractérisé en ce que** la partie (19) de la matière à calciner (16, 20) devant être conduite à la zone de refroidissement (1c), sans passer par la zone de combustion (1b), est délivrée dans une sole ou dans plusieurs soles (5) de la zone de refroidissement (1c).

9. Procédé selon la revendication 1, **caractérisé en ce que** la partie (21) de la matière à calciner (16) peut être évacuée hors du four à soles multiples (1) à partir d'une sole quelconque de la zone de préchauffage (1a), de la zone de combustion (1b) ou de la zone de refroidissement (1c).

10. Procédé selon la revendication 1, **caractérisé en ce que** la matière à calciner (16, 20) est de la magnésite, de la dolomite ou du calcaire.

11. Procédé selon revendication 1 ou 2, **caractérisé en ce que** la partie (18, 19) de la matière à calciner, qui est conduite à la sole chauffée inférieure (4), au moins prévue, et / ou à la zone de refroidissement (1c), sans passer par la sole chauffée supérieure (3), au moins prévue, de la zone de combustion (1b), est une matière fraîche (20).
